# EUROPEAN PATENT APPLICATION

(11) **EP 4 579 552 A1**
(43) Date of publication of application: **02.07.2025**
(21) Application number: 23220283.8
(22) Date of filing: 27.12.2023
(51) Int. Cl.: G06Q 20/06, G06Q 20/36

(54) **SECURE ELECTRONIC TOKEN TRANSACTION UNIT, TOKEN REGISTER, BRIDGE UNIT, ELECTRONIC TOKEN TRANSACTION SYSTEM, AND METHOD FOR TRANSFERRING AN ACCOUNT DIGITAL CURRENCY TOKEN INTO A DIGITAL CURRENCY TOKEN**

(71) Applicant: Giesecke+Devrient advance52 GmbH, 81677 München (DE)
(72) Inventor: HUPEL, Lars, 81677 München (DE)
(74) Representative: Ter Meer Steinmeister & Partner

(57) **Abstract**

A secure electronic token transaction unit (100) comprising a token storage unit (101) configured for storing one or more digital currency token of an electronic token transaction system comprising a token transaction system (900) and an account transaction system (800), a token transfer processing unit (102) configured for transferring, in a transaction, at least one digital currency token to at least one other electronic token transaction unit of the token transaction system, and a token registration request providing unit (103) configured for providing at least one token registration request and transmitting the at least one token registration request to a token register (200) of the transaction system and/or for providing at least one token re-registration request and transmitting the at least one token re-registration request to a token register (200) of the transaction system, wherein the token registration request providing unit (103) is configured for inserting in the registration request and/or re-registration request an identifier of a user of the token transaction system (900), which is at least assigned to an identifier of the user in the account transaction system (800).

## Description

The invention relates to a secure electronic token transaction unit. The invention also refers to a token register. The invention also relates to a bridge unit. The invention also relates to an electronic token transaction system. The invention also relates to a method for transferring an account digital currency token into a digital currency token.

In electronic transaction systems there are electronic transactions provided. Electronic transactions, such as electronic payment transactions, can be made on an account-based model, e.g. online, or a token-based model, e.g. offline. A transaction in the account-based model triggers nodes to decrement the balance of the payer's account and increment the balance of the payee's account. Alternatively, in a token-based model, tokens are directly (or indirectly) transferred between payer and payee, e.g. using electronic wallets etc. Both models are applicable within this disclosure.

Digital currency tokens, or tokens - also referred to as digital assets, electronic coins, coin data sets - may represent any digital asset, in particular a digital currency, preferably a central bank digital currency, short CBDC. These tokens are minted and melted by an issuing unit or dismissing unit of the token transaction system, such as an issuing authority, or a central bank unit or a commercial bank unit. The token comprises a value (v) and a token reference (r) but is not limited thereto. Based on the area of use of the digital currency tokens, the digital currency token may be an online digital currency token within an online transaction system or account transaction system and may be an offline digital currency token within an offline transaction system or token transaction system.

There are different technical approaches for exchanging electronic tokens such as a digital asset e.g., digital currency such as CBDC, issued by a central bank within the electronic tokens transaction system.

Electronic token transactions and/or storage of tokens and any associated transaction data and/or storage data in an electronic token transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

Conventional electronic token transaction systems are either token-based transaction systems or account-based transaction systems. A combination respectively link of both transaction systems is difficult and is only possible through a very high level of effort, because of the highly different characteristics of both transaction systems. Since the combination respectively link of both different transaction systems is highly difficult, there is a need to provide an easy and effortless possibility to combine respectively to link respectively combine the token-based transaction systems and the account-based transaction systems.

The above-identified objectives are solved with the features of the independent patent claims. Further advantageous embodiments are described in the dependent patent claims.

In an aspect of the present invention there is provided a secure electronic token transaction unit. The secure electronic token transaction unit comprises a token storage unit configured for storing one or more digital currency token of an electronic token transaction system comprising a token transaction system and an account transaction system, a token transfer processing unit configured for transferring, in a transaction, at least one digital currency token to at least one other electronic token transaction unit of the token transaction system, and a token registration request providing unit configured for providing at least one token registration request and transmitting the at least one token registration request to a token register of the transaction system and/or for providing at least one token re-registration request and transmitting the at least one token re-registration request to a token register of the transaction system. The token registration request providing unit is configured for inserting in the registration request and/or re-registration request an identifier of a user of the token transaction system, which is at least assigned to an identifier of the user in the transaction system.

The secure electronic token transaction unit may be a secure offline electronic token transaction unit but is not limited thereto. The secure electronic token transaction unit may be any unit being configured for storing online and/or offline digital currency tokens to be directly exchanged between users/participants of an electronic token transaction system. Specifically, the secure offline electronic token transaction unit may be any unit being configured for storing offline digital currency tokens to be directly exchanged between users/participants of an electronic token transaction system. The secure electronic token transaction unit may be called a wallet, a payment application unit or a secure element but is not limited thereto. The secure electronic token transaction unit, in particular the secure offline electronic token transaction unit, may comprise a token storage unit, a token transfer processing unit, and a token registration request providing unit but is not limited thereto. Additionally respectively optionally, the secure electronic token transaction unit may further comprise an offline token receiving unit and a registration result receiving unit but is not limited thereto. The token storage unit, the token transfer processing unit, the token registration request providing unit the offline token receiving unit, and the registration result receiving unit may be directly or indirectly communicatively coupled to each other.

The token storage unit may be an offline token storage unit but is not limited thereto. The token storage unit may represent any unit of the secure electronic token transaction system, being configured for storing, i.e. temporarily or permanently storing, one or more digital currency token, i.e. online or offline digital currency token. Specifically, the offline token storage unit may represent any unit of the secure electronic token transaction system, being configured for storing, i.e. temporarily or permanently storing, one or more offline digital currency token. For instance, the token storage unit may include a data storage or a memory. The data storage or the memory may be included in the token storage unit or may be arranged external to the token storage unit, wherein the data storage or memory is directly communicatively coupled to the token storage unit. In case the data storage or the memory may be included in the token storage unit or may be arranged external to the token storage unit, the token storage unit further comprises a processing unit for transmitting token to be stored and for receiving stored token from the data storage or the memory.

The token transfer processing unit may be an offline token transfer processing unit but is not limited thereto. The token transfer processing unit may represent any unit being configured for transferring, in a transaction, at least one digital currency token from the secure electronic token transaction unit to at least one other electronic token transaction unit of the electronic token transaction system. Specifically, the offline token transfer processing unit may represent any unit being configured for transferring, in an offline transaction, at least one offline digital currency token from the secure offline electronic token transaction unit to at least one other offline electronic token transaction unit of the offline token transaction system. In this context, the term transferring may represent the receiving and/or providing respectively transmitting of at least one digital currency token from the secure electronic token transaction unit to the at least one other electronic token transaction unit of the token transaction system. The token transfer processing unit may be directly or indirectly communicatively coupled to the at least one other electronic token transaction unit but is not limited thereto.

The other electronic token transaction unit may be any other offline electronic token transaction unit but is not limited thereto. The other electronic token transaction unit may be identical to the secure electronic token transaction unit/ secure offline electronic token transaction unit. The other electronic token transaction unit and the secure electronic token transaction unit/ secure offline electronic token transaction unit may only differ in the ownership, belonging or membership. In other words, the owner respectively user of the other electronic token transaction unit and the secure electronic token transaction unit are different/ are not identical.

The token registration request providing unit may be an offline token registration request providing unit but is not limited thereto. The token registration request providing unit may represent any unit being configured for providing respectively generating or creating at least one token registration request. Additionally, the token registration request providing unit may represent any unit being configured for transmitting respectively sending the at least one token registration request to a token register. Additionally or alternatively, the token registration request providing unit may represent any unit being configured for providing, i.e. generating or creating, at least one token re-registration request and for transmitting respectively providing or sending the at least one token re-registration request to a token register. Specifically, the offline token registration request providing unit may be configured for providing at least one offline token registration request and transmitting the at least one offline token registration request to a token register and/or for providing at least one offline token re-registration request and transmitting the at least one offline token re-registration request to a token register. The token registration request providing unit itself or by an optional processing unit may be configured for inserting, i.e. including or adding, in the registration request and/or in the re-registration request an identifier of the user of the token transaction system. By inserting in the registration request and/or re-registration request an identifier of a user of the token transaction system, which is at least assigned to an identifier of the user in the online account transaction system, it can be ensured respectively provided that a digital currency token transfer is only provided between an account token storage unit, e.g. online token storage unit, of a user and a secure token transaction unit, e.g. secure offline token transaction unit, of the same user. The identifier of the user of the token transaction system may be at least assigned respectively corresponds to an identifier of the user in the account transaction system. When the token registration request providing unit is an offline token registration providing unit, the offline token registration request providing unit itself or by an optional processing unit may be configured for inserting, i.e. including or adding, in the offline registration request and/or offline re-registration request an offline-identifier of the user of the offline token transaction system, which is at least assigned to an online-identifier of the user in the online token transaction system. The token registration request providing unit may provide/ generate a token registration request when at least one digital currency token, e.g. offline digital currency token, is received by the secure electronic token transaction unit, in particular by an offline token receiving unit of the secure electronic token transaction unit. The token registration request providing unit may provide/ generate a token re-registration request when the secure electronic token transaction unit initiates respectively start a re-registration proceeding. In other words, a re-registration request is provided/generated by the token registration request providing unit when the secure electronic token transaction unit wants to return a non-transferred digital currency token back to the account token storage. Alternatively, the token registration request providing unit may provide/generate a token re-registration request when the token transfer processing unit transfers at least one digital currency token to the at least one other electronic token transaction unit.

The token registration request may be an offline token registration request but is not limited thereto. The token registration request, e.g. offline token registration request, may be any question, query or request leading to, initiating, or asking for a registration of a digital currency token, in particular an offline digital currency token, in the token register. The token registration request may include a string or an integer but is not limited thereto. The token registration request may be created or generated by the token registration request providing unit. The token registration request may be provided or transmitted from the token registration request providing unit to at least one token register of the electronic token transaction system. In this context, the term "registration" may represent that an online digital currency token/account digital currency token should be transferred into an offline digital currency token/digital currency token. The token registration request may comprise at least a CREATE command (i.e. a command initiating the creation of a digital currency token respectively the registration of an offline digital currency token in the token register) combined with a token value and/or a token source but is not limited thereto. For instance, the token registration request may include the command CREATE together with a token value of 10 digital currency, i.e. with one token being worth 10 currency units, and with a token source leading to a token registration request of "creating 1 offline digital currency token out of an account balance, i.e. having the token worth, of 10 online digital currency token" but is not limited thereto.

The token re-registration request may be an offline token re-registration request but is not limited thereto. The token re-registration request, e.g. offline token re-registration request, may be any question, query or request leading to, initiating, or asking for a re-registration of a digital currency token, in particular an offline digital currency token, in the token register. The token re-registration request may include a string or an integer but is not limited thereto. The token re-registration request may be created or generated by the token registration request providing unit. The token re-registration request may be provided or transmitted from the token registration request providing unit to at least one token register of the electronic token transaction system. In this context, the term "re-registration" may represent that an offline digital currency token/digital currency token should be transferred into an online digital currency token/account digital currency token but is not limited thereto. The token re-registration request may comprise at least a REPLACE (i.e. a command initiating the merging or splitting of a digital currency token) command combined with a token value and/or a token source but is not limited thereto. For instance, the token re-registration request may include the command CREATE together with a token value of 10 digital currency, i.e. with one token being worth 10 currency units, and with a token source leading to a token registration request of "creating 1 online token out of a balance, i.e. having the token worth, of 10 offline digital currency token" but is not limited thereto.

The term "user" as used herein may represent any financial service provider like banks or transaction units of the end user that take part in respectively are members of the electronic token transaction system. Each user may be different to another user.

The identifier may be an online-identifier or an offline-identifier but is not limited thereto. The identifier may represent any information indicating, specifying, or defining a user. The identifier may be a string and/or an integer but is not limited thereto. For instance, the identifier of the user may be the name of the user, an ID number of the user, an account number of the user, a bank account number of the user and/or a pseudonym, i.e. any letter or number sequence set by the user, of the user but is not limited thereto. The identifier may be added respectively inserted into the digital currency token such that the digital currency token may include a value (v), a token reference (r), and the identifier.

The offline token receiving unit may represent any unit being configured for receiving at least one offline digital currency token from an online-to-offline token transfer unit but is not limited thereto. The offline token receiving unit may be directly or indirectly communicatively coupled with the online-to-offline token transfer unit.

The registration result receiving unit may represent any unit being configured for receiving a registration result from a token register. The registration result respectively response may include any information indicating the result of the registration of the at least one digital currency token of the electronic token transaction system in the token register. For instance, the registration result/response may be "registration granted" and "registration denied" but is not limited thereto.

The token register may represent any unit of an electronic token transaction system being configured for registering respectively verifying or deleting a digital currency token, in particular registering, verifying, or deleting a token reference (r) of an offline or online digital currency token of the electronic token transaction system from or in the token register. In other words, the registration or deletion of the token in the token register, based on security-, verification- and registration-purposes, is provided by storing at least the digital currency token reference (r) of all digital currency tokens in the token register without knowing the digital currency tokens itself, i.e. without knowing the rest of the digital currency token, e.g. a token individual token secret and optionally the value (v) etc. Alternatively, the whole token can be stored in the token register. Tokens/digital currency tokens can be further modified respectively replaced by each user of the electronic token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security. The token register may comprise a token registration request receiving unit, a token register storage unit, a registration result providing unit, an offline token re-registration request note providing unit, an offline token deletion request receiving unit, and a deletion result providing unit but is not limited thereto. The token registration request receiving unit, the token register storage unit, the registration result providing unit, the offline token re-registration request note providing unit, the offline token deletion request receiving unit, and the deletion result providing unit may be directly or indirectly communicatively coupled to each other.

The token registration request receiving unit may be an offline token registration receiving unit but is not limited thereto. The token registration request receiving unit may represent any unit being configured for receiving at least one token registration request from a bridge unit/online-to-offline token transfer unit. Alternatively, the token registration request receiving unit may represent any unit being configured for receiving at least one token registration request from a token registration request providing unit of a secure electronic token transaction unit. Additionally or alternatively, the token registration request receiving unit may represent any unit being configured for receiving at least one token re-registration request from the token registration request providing unit of the secure electronic token transaction unit, from at least one other electronic token transaction unit, or from the bridge unit. The token registration request receiving unit may be directly or indirectly communicatively coupled to the bridge unit, the token registration request providing unit, and/or the at least one other electronic token transaction unit but is not limited thereto.

The token register storage unit may be any unit being configured for storing and therefore registering or replacing at least one digital currency token, in particular at least one digital currency token reference of at least one offline digital currency token of the electronic token transaction system. Additionally, the token register storage unit may be configured for deleting or cancelling at least one registered digital currency token, i.e. at least one digital currency token reference of the at least one digital currency token registered in the token register of the electronic token transaction system. For instance, the at least one token register storage unit may include a processing unit and a data storage or a memory. The processing unit may be configured for providing a registration, i.e. storing, a replacement, i.e. merging or splitting, and a deletion or cancellation of the at least one digital currency token, in particular offline token reference, of the electronic token transaction system in the data storage or memory. The data storage or the memory may be included in the token register or may be arranged external to the token register, wherein the data storage or memory is directly communicatively coupled to the processing unit but is not limited thereto. The registering, the replacing or the deleting of the at least one digital currency token in the token register may be based on the received at least one token registration request and/or the received at least one token re-registration request.

The registration result providing unit may be any unit being configured for providing respectively generating or creating a registration result based on the result of the registration and for transmitting respectively sending or providing the registration result to the online-to-offline token transfer unit. Alternatively, the registration result is transmitted respectively send or provided by the registration result providing unit to the offline token registration request providing unit of the secure offline electronic token transaction unit.

The offline token re-registration request note providing unit may represent any unit being configured for providing respectively transmitting at least one offline token re-registration request note to the online-to-offline token transfer unit. Further, the offline token re-registration request note providing unit may be configured for providing respectively generating or creating an offline token re-registration request note. The offline token re-registration request note providing unit may be directly or indirectly communicatively coupled to the online-to-offline token transfer unit but is not limited thereto. The offline token re-registration request note may represent any message including information indicating to the online-to-offline token transfer unit that a re-registration will be executed and leading to a preparation of the online-to-offline token transfer unit for the re-registration, in particular indicating that the token register has received a re-registration request. The offline token re-registration request note may include an integer and/or string but is not limited thereto.

The offline token deletion request receiving unit may represent any unit being configured for receiving at least one offline token deletion request from an online-to-offline token transfer unit or from an offline token registration request providing unit of a secure offline electronic token transaction unit. The offline token deletion request receiving unit may be directly or indirectly communicatively coupled to the online-to-offline token transfer unit or to an offline token registration request providing unit but is not limited thereto. The offline token deletion request may be any question, query or request leading to, initiating, or asking for a deletion of a digital currency token, in particular an offline digital currency token, in the token register. The offline token deletion request may include a string or an integer but is not limited thereto. The offline token deletion request may be created or generated by the online-to-offline token transfer unit or by the offline token registration request providing unit but is not limited thereto. The offline token deletion request may be provided or transmitted from online-to-offline token transfer unit or from an offline token registration request providing unit to the offline token deletion request receiving unit of the token register. In this context, the term "deletion" represents that an offline digital currency token should be transferred into an online digital currency token. Alternatively, the term "deletion" represents that an offline digital currency token should be transferred into an account digital currency token of the account system, i.e. credited on an online account of the user. The offline token deletion request may comprise at least a DELETE command (i.e. a command initiating the deletion of a digital currency token respectively the deletion of an offline digital currency token in the token register) but is not limited thereto. Optionally, the token deletion request providing unit is also configured for inserting in the deletion request an identifier of a user of the token transaction system, which is at least assigned to an identifier of the user in the account transaction system. By inserting in the deletion request an identifier of a user of the token transaction system, which is at least assigned to an identifier of the user in the account transaction system, it can be ensured respectively provided that a digital currency token transfer is only provided between a secure token transaction unit of a user and an account token storage unit of the same user.

The deletion result providing unit may be any unit being configured for providing respectively generating or creating a deletion result and for transmitting respectively providing or sending the deletion result to the online-to-offline token transfer unit. The deletion result respectively response may include any information indicating the result of the deletion of the at least one digital currency token of the electronic token transaction system in the token register. For instance, the deletion result/response may be "deletion granted" and "deletion denied" but is not limited thereto.

The bridge unit may be an online-to-offline token transfer unit but is not limited thereto. The bridge unit may represent any unit providing an online-to-online token transfer, an offline-to-offline token transfer, an online-to-offline token transfer and/or an offline-to-online token transfer but is not limited thereto. The bridge unit may comprise a bridge request receiving unit, a token receiving unit, a bridge transfer unit, a token registration request providing unit, a token providing unit, an offline token re-registration request note receiving unit, an offline token re-registration request receiving unit, an offline token re-registration request providing unit, an offline token receiving unit, an offline token deletion request providing unit, and an online token providing unit but is not limited thereto. The bridge request receiving unit, the token receiving unit, the bridge transfer unit, the token registration request providing unit, the token providing unit, the offline token re-registration request note receiving unit, the offline token re-registration request receiving unit, the offline token re-registration request providing unit, the offline token receiving unit, the offline token deletion request providing unit, and the online token providing unit may be directly or indirectly communicatively coupled to each other. Further, the bridge unit may be configured for minting or melting at least one digital currency token or for receiving and providing a valid token from an central authority like the central bank, CB, having the authority to mint or to melt digital currency tokens. For instance, the bridge unit may be a financial service provider, FSP, or a financial service provider wallet at the CB but is not limited thereto.

The bridge request receiving unit may be an online-to-offline token transfer request receiving unit but is not limited thereto. The bridge request receiving unit may represent any unit being configured for receiving at least one bridge request, in particular online-to-offline token transfer request, from at least one online token storage unit. The bridge request receiving unit may be directly or indirectly communicatively coupled to the at least one online token storage unit. The bridge request may be an online-to-offline token transfer request but is not limited thereto. The bridge request may be any question, query or request leading to, initiating, or asking for transferring an online digital currency token to an offline digital currency token but is not limited thereto. The bridge request may include a string or an integer but is not limited thereto. The bridge request may be created or generated by the at least one online token storage unit of the account, e.g. online, transaction system but is not limited thereto. The account transaction system may generate or create the bridge request as an answer of a communication respectively instruction for triggering a payment.

The account token receiving unit may be an online token receiving unit but is not limited thereto. The account token receiving unit may represent any unit being configured for receiving at least one account digital currency token, in particular online digital currency token, from the at least one online token storage unit. The account token receiving unit may be directly or indirectly communicatively coupled to the at least one online token storage unit.

The bridge transfer unit may be an online-to-offline token transfer unit but is not limited thereto. The bridge transfer unit may represent any unit being configured for transferring, i.e. providing an online-to-online token transfer, an offline-to-offline token transfer, an online-to-offline token transfer and/or an offline-to-online token transfer, at least one digital currency token into at least one other digital currency token. For instance, in case of an online-to-offline token transfer, the transferring is provided by creating the same value, in particular monetary value, of offline tokens like the online tokens provided to the online-to-offline token transfer unit, blocking the online tokens by e.g. marking or encrypting the tokens and registering the transferred offline tokens in the token register. For instance, in case of an offline-to-online token transfer, the transferring is provided by creating the same value of online tokens like the offline tokens provided to the online-to-offline token transfer unit, unblocking the online tokens by e.g. unmarking or decrypting the tokens and deleting the transferred offline tokens in the token register. The blocking, in particular the marking or encrypting, may be provided in the account transaction system, e.g. online token transaction system, or in the token transaction system, e.g. offline token transaction system, but is not limited thereto.

The token registration request providing unit may be an offline token registration request providing unit but is not limited thereto. The token registration request providing unit may be any unit configured for providing respectively generating or creating at least one token registration request based on the received at least one bridge request. Further, the token registration request providing unit may be any unit configured for transmitting respectively sending the at least one token registration request to at least one token register. The token registration request providing unit may be directly or indirectly communicatively coupled to the token register.

The token providing unit may be an offline token providing unit but is not limited thereto. The token providing unit may represent any unit being configured for providing respectively sending or transmitting at least one digital currency token based on the received at least one bridge request to a secure electronic token transaction unit. The token providing unit may be directly or indirectly coupled to the secure electronic token transaction unit.

The offline token re-registration request note receiving unit may represent any unit being configured for receiving at least one offline token re-registration request note from a token register. Alternatively, the offline token re-registration request note receiving unit may represent any unit being configured for receiving at least one offline token re-registration request note from the other offline electronic token transaction unit. The offline token re-registration request note receiving unit may be directly or indirectly coupled to the token register or to the other offline electronic token transaction unit.

The offline token re-registration request receiving unit may represent any unit being configured for receiving at least one offline token re-registration request from at least one other offline electronic token transaction unit. The offline token re-registration request receiving unit may be directly or indirectly communicatively coupled to the at least one other offline electronic token transaction unit.

The offline token re-registration request providing unit may represent any unit being configured for providing respectively transmitting, sending or forwarding the at least one offline token re-registration request to the token register. The offline token re-registration request providing unit may be communicatively coupled to the token register.

The offline token receiving unit may be any unit being configured for receiving at least one offline digital currency token from at least one other offline electronic token transaction unit. The offline token receiving unit may be directly or indirectly communicatively coupled to the at least one other offline electronic token transaction unit.

The offline token deletion request providing unit may represent any unit being configured for providing respectively generating or creating at least one offline token deletion request based on the received at least one offline digital currency token and for transmitting respectively sending or providing the at least one offline token deletion request to at least one token register. The offline token deletion request providing unit may be directly or indirectly communicatively coupled to the token register.

The online token providing unit may represent any unit being configured for providing respectively transmitting or sending at least one online digital currency token from the online-to-offline token transfer unit to an at least one online token storage unit. The online token providing unit may be directly or indirectly communicatively coupled to the at least one online token storage unit but is not limited thereto.

By inserting in the registration request and/or re-registration request an identifier of a user of the token transaction system, which is at least assigned to an identifier of the user in the online account transaction system, it is ensured that a digital currency token transfer is only provided between an online token storage unit of a user and a secure offline token transaction unit of the same user. Therefore, an easy and effortless possibility to combine respectively to link respectively combine the token-based, i.e. offline, transaction systems and the account-based, i.e. online, transaction systems can be provided.

In a preferred embodiment of the secure electronic token transaction unit, the secure electronic token transaction unit is a secure offline electronic token transaction unit, and/or the token storage unit is an offline token storage unit, and/or the one or more digital currency token is one or more offline digital currency token, and/or the token transaction system is an offline token transaction system, and/or the account transaction system is an online transaction system, and/or the token transfer processing unit is an offline token transfer processing unit, and/or the transaction is an offline transaction, and/or the at least one other electronic token transaction unit is at least one other offline electronic token transaction unit, and/or the token registration request providing unit is an offline token registration request providing unit, and/or the at least one token registration request is at least one offline token registration request, and/or the at least one token re-registration request is at least one offline token re-registration request, and/or the identifier is an offline-identifier or an online-identifier.

Therefore, it is described a secure offline electronic token transaction unit comprising: an offline token storage unit configured for storing one or more offline digital currency tokens of an electronic token transaction system comprising an offline token transaction system and an online transaction system; an offline token transfer processing unit configured for transferring, in an offline transaction, at least one offline digital currency token to at least one other offline electronic token transaction unit of the offline token transaction system, an offline token registration request providing unit configured for providing at least one offline token registration request and transmitting the at least one offline token registration request to a token register of the offline transaction system and/or for providing at least one offline token re-registration request and transmitting the at least one offline token re-registration request to a token register of the offline transaction system, wherein the offline token registration request providing unit is configured for inserting in the registration request and/or re-registration request an offline-identifier of a user of the offline token transaction system, which is at least assigned to an online-identifier of the user in the online transaction system.

In a preferred embodiment of the secure offline electronic token transaction unit, the secure offline electronic token transaction unit further comprises an offline token receiving unit configured for receiving at least one offline digital currency token from an online-to-offline token transfer unit.

In a preferred embodiment of the secure offline electronic token transaction unit, the secure offline electronic token transaction unit further comprises a registration result receiving unit configured for receiving a registration result from a token register.

By providing a registration result to the secure offline electronic token transaction unit, it is reliable provided that the secure offline electronic token transaction unit informed immediately about the result of the registration, i.e. if the registration was successful or not. Thereby, the secure offline electronic token transaction unit can immediately check on the registration and react on a non-desired result of the registration.

In another aspect of the invention there is provided a token register. The token register comprises a token registration request receiving unit for receiving at least one token registration request from a bridge unit or from a token registration request providing unit of a secure electronic token transaction unit and/or for receiving at least one token re-registration request from the token registration request providing unit of the secure electronic token transaction unit, from at least one other electronic token transaction unit or from the bridge unit, and a token register storage unit for registering, replacing, or deleting at least one digital currency token in the token register based on the received at least one token registration request and/or the received at least one token re-registration request.

In a preferred embodiment of the token register, the token registration request receiving unit is an offline token registration request receiving unit, and/or the at least one token registration request is at least one offline token registration request, and/or the bridge unit is an online-to-offline token transfer unit, and/or the token registration request providing unit is an offline token registration request providing unit, and/or the secure electronic token transaction unit is a secure offline electronic token transaction unit, and/or the at least one token re-registration request is at least one offline token re-registration request, and/or the at least one other electronic token transaction unit is at least one other offline electronic token transaction unit, and/or the at least one digital currency token is at least one offline digital currency token.

Therefore, it is described a token register comprising: an offline token registration request receiving unit for receiving at least one offline token registration request from an online-to-offline token transfer unit or from an offline token registration request providing unit of a secure offline electronic token transaction unit and/or for receiving at least one offline token re-registration request from the offline token registration request providing unit of the secure offline electronic token transaction unit, from the at least one other offline electronic token transaction unit of from the online-to-offline token transfer unit; and a token register storage unit for registering, replacing, or deleting at least one offline digital currency token in the token register based on the received at least one offline token registration request and/or the received at least one offline token re-registration request.

In a preferred embodiment of the token register, the token register further comprises a registration result providing unit configured for providing a registration result and for transmitting the registration result to the online-to-offline token transfer unit or to an offline token registration request providing unit of the secure offline electronic token transaction unit.

In a preferred embodiment of the token register, the token register further comprises an offline token re-registration request note providing unit configured for providing at least one offline token re-registration request note and for transmitting the at least one offline token re-registration request note to the online-to-offline token transfer unit.

In a preferred embodiment of the token register, the token register further comprises an offline token deletion request receiving unit for receiving at least one offline token deletion request from an online-to-offline token transfer unit or from an offline token registration request providing unit of a secure offline electronic token transaction unit.

In a preferred embodiment of the token register, the token register further comprises a deletion result providing unit configured for providing a deletion result and for transmitting the deletion result to the online-to-offline token transfer unit.

By providing a deletion response respectively result to the online-to-offline token transfer unit, it is reliable provided that the online-to-offline token transfer unit is informed immediately about the result of the deletion, i.e. if the deletion was successful or not. Thereby, the online-to-offline token transfer unit can immediately check on the deletion and react on a non-desired result of the deletion.

In another aspect of the invention there is provided a bridge unit. The bridge unit comprises a bridge request receiving unit for receiving at least one bridge request from at least one account token storage unit, an account token receiving unit for receiving at least one account digital currency token from the at least one account token storage unit, a bridge transfer unit for transferring at least one account digital currency token into at least one digital currency token, a token registration request providing unit for providing at least one token registration request based on the received at least one bridge request and for transmitting the at least one token registration request to at least one token register, and a token providing unit for providing at least one digital currency token based on the received at least one bridge request to a secure electronic token transaction unit. The token registration request providing unit is configured for inserting in the registration request an identifier of a user of the token transaction system, which is at least assigned to an identifier of the user in the account transaction system.

In a preferred embodiment of the bridge unit, the bridge unit is an online-to-offline token transfer unit, and/or the bridge request receiving unit is an online-to-offline token transfer request receiving unit, and/or the least one bridge request is at least one online-to-offline token transfer request, and/or the at least one account token storage unit is at least one online token storage unit, and/or the account token receiving unit is an online token receiving unit, and/or the at least one account digital currency token is at least one online digital currency token; and/or the at least one digital currency token is at least one offline digital currency token; and/or the bridge transfer unit is an online-to-offline token transfer unit, and/or the token registration request providing unit is an offline token registration request providing unit, and/or the at least one token registration request is at least one offline token registration request, and/or the token providing unit is an offline token providing unit, and/or the secure electronic token transaction unit is a secure offline electronic token transaction unit, and/or the identifier is an offline-identifier or an online-identifier, and/or the token transaction system is an offline token transaction system, and/or the account transaction system is an online transaction system.

Therefore, it is described an online-to-offline token transfer unit comprising: an online-to-offline token transfer request receiving unit for receiving at least one online-to-offline token transfer request from at least one online token storage unit; an online token receiving unit for receiving at least one online digital currency token from the at least one online token storage unit; an online-to-offline token transfer unit for transferring an online digital currency token into an offline digital currency token; an offline token registration request providing unit for providing at least one offline token registration request based on the received at least one online-to-offline token transfer request and for transmitting the at least one offline token registration request to at least one token register; and an offline token providing unit for providing at least one offline digital currency token based on the received at least one online-to-offline token transfer request to the secure offline electronic token transaction unit, wherein the offline token registration request providing unit is configured for inserting in the registration request an offline-identifier of a user of the offline token transaction system, which is at least assigned to an online-identifier of the user in the online transaction system.

In a preferred embodiment of the online-to-offline token transfer unit, the online-to-offline token transfer unit further comprises an offline token re-registration request note receiving unit for receiving at least one offline token re-registration request note from the offline token re-registration request note providing unit (204) of the token register or for receiving at least one offline token re-registration request note from the other offline electronic token transaction unit.

In a preferred embodiment of the online-to-offline token transfer unit, the online-to-offline token transfer unit further comprises an offline token re-registration request receiving unit for receiving at least one offline token re-registration request from at least one other offline electronic token transaction unit, and an offline token re-registration request providing unit for providing at least one offline token re-registration request to the token register.

In a preferred embodiment of the online-to-offline token transfer unit, the online-to-offline token transfer unit further comprises an offline token receiving unit for receiving at least one offline digital currency token from at least one other offline electronic token transaction unit, an offline token deletion request providing unit for providing at least one offline token deletion request based on the received at least one offline digital currency token and for transmitting the at least one offline token deletion request to at least one token register, and an online token providing unit for providing at least one online token to an at least one online token storage unit.

In another aspect of the invention there is provided an electronic token transaction system. The electronic token transaction system comprises a token register as described above, an account transaction system, and a token transaction system. The token transaction system comprises a bridge unit as described above and an electronic token transaction unit as described above.

In a preferred embodiment of the electronic token transaction system, the account transaction system is an online token transaction system, and/or the token transaction system is an offline token transaction system, and/or the bridge unit is an online-to-offline token transfer unit, and/or the electronic token transaction unit is an offline electronic token transaction unit.

Therefore, it is described an electronic token transaction system comprising: a token register as described above; an online token transaction system; and an offline token transaction system, wherein the offline token transaction system comprises an online-to-offline token transfer unit as described above and an offline electronic token transaction unit as described above.

In another aspect of the invention there is provided a method for transferring an account digital currency token into another digital currency token. The method comprises the following steps: receiving by a bridge receiving unit of the bridge unit at least one bridge request from at least one account token storage unit, receiving by an account token receiving unit of the bridge unit at least one account digital currency token from at least one account token storage unit, transferring by a bridge transfer unit the received account digital currency token to a digital currency token, providing by a token providing unit of the bridge unit at least one digital currency token to a token receiving unit of the secure electronic token transaction unit, and providing by a token registration request providing unit of the bridge unit at least one token registration request and transmitting the at least one token registration request to at least one token register, or providing by a token registration request providing unit of the secure electronic token transaction unit at least one token registration request and transmitting the at least one token registration request to at least one token register. The providing by the token registration request providing unit or by the token registration request providing unit inserts in the registration request an identifier of a user of the token transaction system, which is at least assigned to an identifier of the user in an account transaction system.

In a preferred embodiment of the method, the digital currency token is an offline digital currency token, and/or the account digital currency token is an online digital currency token, and/or the bridge request receiving unit is an online-to-offline token transfer request receiving unit, and/or the bridge unit is an online-to-offline token transfer unit, and/or the least one bridge request is at least one online-to-offline token transfer request, and/or the at least one account token storage unit is at least one online token storage unit, and/or the account token receiving unit is an online token receiving unit, and/or the bridge transfer unit is an online-to-offline token transfer unit, and/ or the token providing unit is an offline token providing unit, and/or the token receiving unit is an offline token receiving unit, and/or the secure electronic token transaction unit is a secure offline electronic token transaction unit, and/or the token registration request providing unit is an offline token registration request providing unit, and/or the at least one token registration request is at least one offline token registration request or at least one online token registration request, and/or the token registration request providing unit is an offline token registration request providing unit, and/or the identifier is an offline-identifier or an online-identifier, and/or the token transaction system is an offline token transaction system, and/or the account transaction system is an online transaction system.

Therefore, it is described a method for transferring an online digital currency token into an offline digital currency token, comprising: receiving by an online-to-offline token transfer request receiving unit of the online-to-offline token transfer unit at least one online-to-offline token transfer request from at least one online token storage unit; receiving by an online token receiving unit of the online-to-offline token transfer unit at least one online digital currency token from at least one online token storage unit; transferring by an online-to-offline transfer unit the received online digital currency token to an offline digital currency token; providing by an offline token providing unit of the online-to-offline token transfer unit at least one offline digital currency token to an offline token receiving unit of the secure offline electronic token transaction unit; and providing by an offline token registration request providing unit of the online-to-offline token transfer unit at least one offline token registration request and transmitting the at least one offline token registration request to at least one token register; or providing by an offline token registration request providing unit of the secure offline electronic token transaction unit at least one offline token registration request and transmitting the at least one offline token registration request to at least one token register, wherein the providing by the offline token registration request providing unit or by the offline token registration request providing unit inserts in the registration request an offline-identifier of a user of the offline token transaction system, which is at least assigned to an online-identifier of the user in the online transaction system.

In a preferred embodiment of the method, the method further comprises the step of transferring by an offline token transfer processing unit of the secure offline electronic token transaction unit at least one offline token from the secure offline electronic token transaction unit to at least one other offline electronic token transaction unit being external to the secure offline electronic token transaction unit.

In a preferred embodiment of the method, the method further comprises the step of providing by a registration result providing unit of the token register a registration result and transmitting the registration result to the online-to-offline token transfer unit or to the offline token registration request providing unit of a secure offline electronic token transaction unit.

In a preferred embodiment of the method, the method further comprises the step of receiving by an offline token re-registration request receiving unit of the token register at least one offline token re-registration request from at least one other offline electronic token transaction unit, and providing by an offline token re-registration request note providing unit of the token register at least one offline token re-registration request note to the online-to-offline token transfer unit.

In a preferred embodiment of the method, the method further comprises the step of receiving by an offline token re-registration request receiving unit of the token register at least one offline token re-registration request from at least one other offline electronic token transaction unit, and providing at least one offline token re-registration request note from the at least one other offline electronic token transaction unit to the online-to-offline token transfer unit.

In a preferred embodiment of the method, the method further comprises the step of receiving by an offline token re-registration request receiving unit of the token register at least one offline token re-registration request from an offline token registration request providing unit of the secure offline electronic token transaction unit, and providing by an offline token re-registration request note providing unit of the token register at least one offline token re-registration request note to the online-to-offline token transfer unit.

In a preferred embodiment of the method, the method further comprises the step of receiving by an offline token re-registration request receiving unit of the online-to-offline token transfer unit at least one offline token re-registration request from at least one other offline electronic token transaction unit, and providing by an offline token re-registration request providing unit of the online-to-offline token transfer unit at least one offline token re-registration request to the token register.

In a preferred embodiment of the method, the method further comprises the step of receiving by an offline token receiving unit of the online-to-offline token transfer unit at least one offline digital currency token from at least one other offline token storage unit, providing by an offline token deletion request providing unit of the online-to-offline token transfer unit at least one offline token deletion request to at least one token register, transferring by an online-to-offline transfer unit of the online-to-offline token transfer unit the received offline digital currency token to an online digital currency token, and providing by an online token providing unit of the online-to-offline token transfer unit at least one online token to the at least one online token storage unit.

In a preferred embodiment of the method, the method further comprises the step of providing by a deletion result providing unit of the token register a deletion result and transmitting the deletion result to the online-to-offline token transfer unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure electronic token transaction unit.
Fig. 2 shows an exemplary embodiment of a token register.
Fig. 3 shows an exemplary embodiment of a bridge unit.
Fig. 4 shows an exemplary embodiment of an electronic token transaction system.
Fig. 5 shows an exemplary embodiment of a method for transferring an account digital currency token into a digital currency token.
Fig. 6 shows a first variant of a method for transferring an online digital currency token into an offline digital currency token and for transferring an offline token to another offline electronic token transaction unit.
Fig. 7 shows a second variant of a method for transferring an online digital currency token into an offline digital currency token and for transferring an offline token to another offline electronic token transaction unit.
Fig. 8 shows a third variant of a method for transferring an online digital currency token into an offline digital currency token and for transferring an offline token to another offline electronic token transaction unit.
Fig. 9 shows a fourth variant of a method for transferring an online digital currency token into an offline digital currency token and for transferring an offline token to another offline electronic token transaction unit.

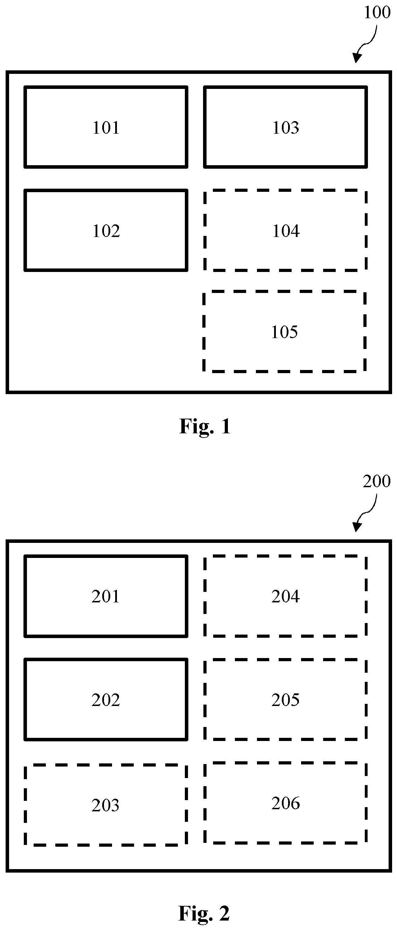

In Fig. 1, there is depicted an exemplary embodiment of a secure electronic token transaction unit, in particular secure offline electronic token transaction unit, 100. The secure electronic token transaction unit, in particular secure offline electronic token transaction unit, 100 comprises a token storage unit, in particular offline token storage unit, 101, a token transfer processing unit, in particular offline token transfer processing unit, 102, and a token registration request providing unit, in particular offline token registration request providing unit, 103. The token storage unit, in particular offline token storage unit, 101 is configured for storing one or more digital currency token, in particular offline digital currency token, of an electronic token transaction system. The electronic token transaction system comprises a token transaction system, in particular offline token transaction system, 900 and an account transaction system, in particular online token transaction system, 800. The token transfer processing unit, in particular offline token transfer processing unit, 102 is configured for transferring, in a transaction, in particular offline transaction, at least one digital currency token, in particular offline digital currency token, to at least one other electronic token transaction unit, in particular other offline electronic token transaction unit, of the token transaction system. The token registration request providing unit, in particular offline token registration request providing unit, 103 is configured for providing at least one token registration request, in particular offline token registration request, and transmitting the at least one token registration request, in particular offline token registration request, to a token register 200 of the electronic token transaction system and/or for providing at least one token re-registration request, in particular offline token re-registration request, and transmitting the at least one token re-registration request, in particular offline token re-registration request, to a token register 200 of the electronic token transaction system. The token registration request providing unit, in particular offline token registration request providing unit, 103 is configured for inserting in the registration request, in particular offline token registration request, and/or re-registration request, in particular offline token re-registration request, an identifier, in particular offline-identifier, of a user of the token transaction system, in particular offline token transaction system, 900, which is at least assigned respectively corresponds to an identifier, in particular online identifier, of the user in the account transaction system, in particular online transaction system 800.

Optionally, the secure offline electronic token transaction unit 100 further comprises an offline token receiving unit 104. The offline token receiving unit 104 is configured for receiving at least one offline digital currency token from an online-to-offline token transfer unit 300.

Optionally, the secure offline electronic token transaction unit 100 further comprises a registration result receiving unit 105. The registration result receiving unit 105 is configured for receiving a registration result from a token register 200.

The token storage unit, in particular offline token storage unit, 101, the token transfer processing unit, in particular offline token transfer processing unit, 102, the token registration request providing unit, in particular offline token registration request providing unit, 103, the offline token receiving unit 104, and the registration result receiving unit 105 may be directly or indirectly communicatively coupled to each other.

In Fig. 2, there is depicted an exemplary embodiment of a token register. The token register 200 comprises a token registration request receiving unit, in particular offline token registration request receiving unit, 201 and a token register storage unit 202. The token registration request receiving unit 201 is configured for receiving at least one token registration request, in particular offline token registration request, from a bridge unit, in particular online-to-offline token transfer unit, 300 or from a token registration request providing unit, in particular offline token registration request providing unit, 103 of a secure electronic token transaction unit, in particular secure offline electronic token transaction unit, 100 and/or for receiving at least one token re-registration request, in particular offline token re-registration request, from the token registration request providing unit, in particular offline token registration request providing unit, 103 of the secure electronic token transaction unit, in particular secure offline electronic token transaction unit, 100 from at least one other electronic token transaction unit, in particular other offline electronic token transaction unit, of from the bridge unit, in particular online-to-offline token transfer unit, 300. The token register storage unit 202 is configured for registering, replacing, or deleting at least one digital currency token, in particular offline digital currency token, in the token register 200 based on the received at least one token registration request, in particular offline token registration request, and/or the received at least one token re-registration request, in particular offline token re-registration request.

Optionally, the token register 200 further comprises a registration result providing unit 203. The registration result providing unit 203 is configured for providing a registration result and for transmitting the registration result to the online-to-offline token transfer unit 300 or to an offline token registration request providing unit 103 of the secure offline electronic token transaction unit 100.

Optionally the token register 200 further comprises an offline token re-registration request note providing unit 204. The offline token re-registration request note providing unit 204 is configured for providing at least one offline token re-registration request note and for transmitting the at least one offline token re-registration request note to the online-to-offline token transfer unit 300.

Optionally, the token register 200 further comprises an offline token deletion request receiving unit 205 being configured for receiving at least one offline token deletion request from an online-to-offline token transfer unit 300 or from an offline token registration request providing unit 103 of a secure offline electronic token transaction unit 100.

Optionally, the token register 200 further comprises a deletion result providing unit 206 being configured for providing a deletion result and for transmitting the deletion result to the online-to-offline token transfer unit 300.

The token registration request receiving unit, in particular offline token registration request receiving unit, 201, the token register storage unit 202, the registration result providing unit 203, the offline token re-registration request note providing unit 204, the offline token deletion request receiving unit 205, and the deletion result providing unit 206 may be directly or indirectly communicatively coupled to each other.

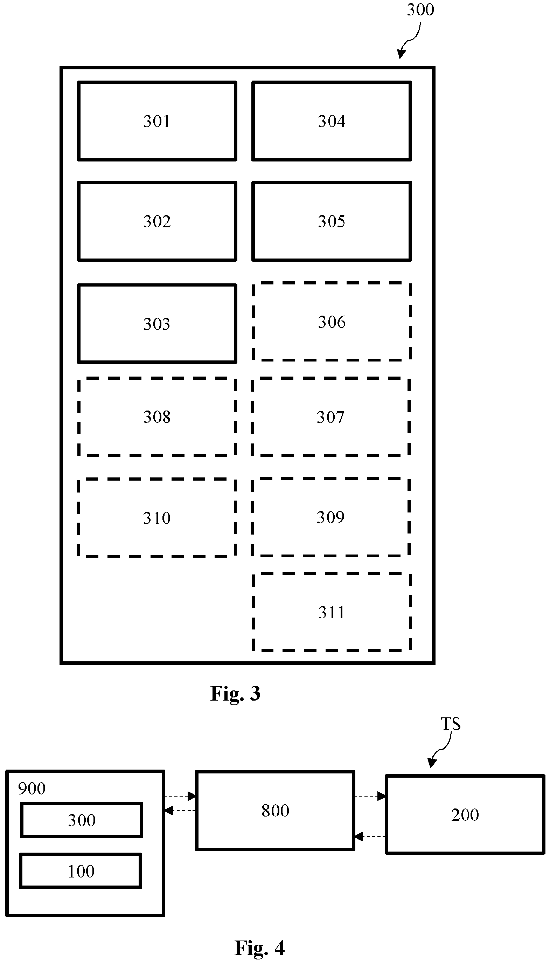

In Fig. 3, there is depicted an exemplary embodiment of a bridge unit. The bridge unit, in particular online-to-offline token transfer unit, 300 comprises a bridge request receiving unit, in particular online-to-offline token transfer request receiving unit, 301, an account token receiving unit, in particular online token receiving unit, 302, a bridge transfer unit, in particular online-to-offline token transfer unit, 303, a token registration request providing unit, in particular offline token registration request providing unit, 304, and a token providing unit, in particular offline token providing unit 305. The bridge request receiving unit, in particular online-to-offline token transfer request receiving unit, 301 is configured for receiving at least one bridge request, in particular online-to-offline token transfer request, from at least one account token storage unit, in particular online token storage unit. The account token receiving unit, in particular online token receiving unit, 302 is configured for receiving at least one account digital currency token, in particular online digital currency token, from the at least one account token storage unit, in particular online token storage unit. The bridge transfer unit, in particular online-to-offline token transfer unit, 303 is configured for transferring at least one account digital currency token, in particular online digital currency token, into at least one digital currency token, in particular offline digital currency token. The token registration request providing unit, in particular offline token registration request providing unit, 304 is configured for providing at least one token registration request, in particular offline token registration request, based on the received at least one bridge request, in particular online-to-offline token transfer request, and for transmitting the at least one token registration request, in particular offline token registration request, to at least one token register 200. The token providing unit, in particular offline token providing unit, 305 is configured for providing at least one digital currency token, offline digital currency token, based on the received at least one bridge request, in particular online-to-offline token transfer request, to a secure electronic token transaction unit, in particular secure offline electronic token transaction unit, 100. The token registration request providing unit, in particular offline token registration request providing unit, 304 is configured for inserting in the token registration request, in particular offline token registration request, an identifier, in particular offline identifier, of a user of the token transaction system, in particular offline token transaction system, 900, which is at least assigned respectively corresponds to an identifier, in particular online identifier, of the user in the account transaction system, in particular online transaction system, 800.

Optionally, the online-to-offline token transfer unit 300 further comprises an offline token re-registration request note receiving unit 306. The offline token re-registration request note receiving unit 306 is configured for receiving at least one offline token re-registration request note from the offline token re-registration request note providing unit (204) of the token register 200 or for receiving at least one offline token re-registration request note from the other offline electronic token transaction unit.

Optionally, the online-to-offline token transfer unit 300 further comprises an offline token re-registration request receiving unit 307. The offline token re-registration request receiving unit 307is configured for receiving at least one offline token re-registration request from at least one other offline electronic token transaction unit. Further the online-to-offline token transfer unit 300 further comprises an offline token re-registration request providing unit 308. The offline token re-registration request providing unit 308 is configured for providing at least one offline token re-registration request to the token register 200.

Optionally, the online-to-offline token transfer unit 300 further comprises an offline token receiving unit 309. The offline token receiving unit 309 is configured for receiving at least one offline digital currency token from at least one other offline electronic token transaction unit. The online-to-offline token transfer unit 300 further comprises an offline token deletion request providing unit 310. The offline token deletion request providing unit 310 is configured for providing at least one offline token deletion request based on the received at least one offline digital currency token and for transmitting the at least one offline token deletion request to at least one token register 200. The online-to-offline token transfer unit 300 further comprises an online token providing unit 311. The online token providing unit 311 is configured for providing at least one online token to an at least one online token storage unit.

In Fig. 4, there is depicted an exemplary embodiment of an electronic token transaction system. The electronic token transaction system TS comprises a token register 200 as described above, an account transaction system, in particular online token transaction system, 800, and a token transaction system, in particular offline token transaction system, 900. The token transaction system, in particular offline token transaction system, 900 comprises a bridge unit, in particular online-to-offline token transfer unit, 300 as described above and a secure electronic token transaction unit; in particular secure offline electronic token transaction unit, 100 as described above. The token register 200, the offline token transaction system 900, and the online token transaction system 800 are directly or indirectly communicatively coupled to each other.

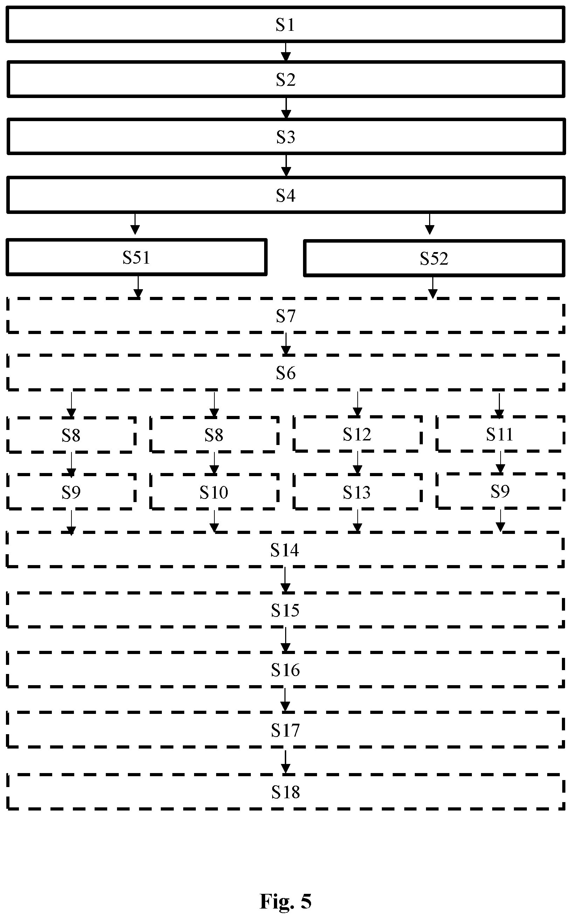

In Fig. 5, there is depicted an exemplary embodiment of a method for transferring an account digital currency token, in particular online digital currency token, into a digital currency token, in particular offline digital currency token. In a first step S1, at least one bridge request, in particular online-to-offline token transfer request, is received by a bridge receiving unit, in particular online-to-offline token transfer request receiving unit, 301 of the bridge unit, in particular online-to-offline transfer unit, 300 from at least one account token storage unit, in particular online token storage unit. In a second step S2, at least one account digital currency token, in particular online digital currency token, is received by an account token receiving unit, in particular online token receiving unit, 302 of the bridge unit, in particular online-to-offline transfer unit, 300 from at least one account token storage unit, in particular online token storage unit. In a third step S3, the received account digital currency token, in particular online digital currency token, is transferred by a bridge transfer unit, in particular online-to-offline toke transfer unit, 303 to a digital currency token, in particular offline digital currency token. The transferring of the account digital currency token to a digital currency token, is provided by creating the same value, in particular monetary value, of offline tokens like the online tokens provided to the online-to-offline token transfer unit, blocking the online tokens by e.g. marking or encrypting the tokens and registering the transferred offline token in the token register. Therefore, the third step S3 may comprise the first sub step S31 to provide or create an offline token having the same monetary value like the online token, the second step S32 to block the online token by marking or encrypting, and the third substep S33 to register the offline token in the token register. In a fourth step S4, at least one digital currency token, in particular offline digital currency token, is provided by a token providing unit, in particular offline token providing unit, 305 of the bridge unit, in particular online-to-offline transfer unit, 300 to a token receiving unit, in particular offline token receiving unit, 104 of the secure electronic token transaction unit, in particular secure offline electronic token transaction unit, 100. In a fifth step S51, at least one token registration request, in particular offline token registration request, is provided by a token registration request providing unit, in particular offline token registration request providing unit, 304 of the bridge unit, in particular online-to-offline transfer unit, 300 and the at least one token registration request, in particular offline token registration request, is transmitted to at least one token register 200. In an alternative fifth step S52, at least one token registration request, in particular offline token registration request, is provided by a token registration request providing unit, in particular offline token registration request providing unit, 103 of the secure electronic token transaction unit, in particular secure offline electronic token transaction unit, 100 and the at least one token registration request, in particular offline token registration request, is transmitted to at least one token register 200. The providing by the token registration request providing unit, in particular offline token registration request providing unit, 304 or by the token registration request providing unit, in particular offline token registration request providing unit, 103 inserts in the token registration request, in particular offline token registration request, an identifier, in particular offline identifier, of a user of the token transaction system, in particular offline token transaction system, 900, which is at least assigned to an identifier, in particular online identifier, of the user in an account transaction system, in particular online transaction system 800.

Optionally, in a sixth step S6, at least one offline token is transferred by an offline token transfer processing unit 102 from the secure offline electronic token transaction unit 100 to at least one other offline electronic token transaction unit being external to the secure offline electronic token transaction unit 100. Alternatively, in a sixth step S6, a registration result is provided by a registration result providing unit 203 of the token register 200 and the registration result is transmitted to the online-to-offline token transfer unit 300 or to the offline token registration request providing unit 104 of a secure offline electronic token transaction unit 100.

Optionally, in a sept step S7, a registration result is provided by a registration result providing unit 203 of the token register 200 and the registration result is transmitted to the online-to-offline token transfer unit 300 or to the offline token registration request providing unit 104 of a secure offline electronic token transaction unit 100. Alternatively, in a sept step S7, at least one offline token is transferred by an offline token transfer processing unit 102 from the secure offline electronic token transaction unit 100 to at least one other offline electronic token transaction unit being external to the secure offline electronic token transaction unit 100.

Optionally, in an eight step S8, at least one offline token re-registration request is received by an offline token re-registration request receiving unit 201 of the token register 200 from at least one other offline electronic token transaction unit. In a nineth step S9, at least one offline token re-registration request note is provided by an offline token re-registration request note providing unit 204 of the token register 200 to the online-to-offline token transfer unit 300.

Optionally, in an eight step S8, at least one offline token re-registration request is received by an offline token re-registration request receiving unit 201 of the token register 200 from at least one other offline electronic token transaction unit. In a tenth step S10, at least one offline token re-registration request note is provided from the at least one other offline electronic token transaction unit to the online-to-offline token transfer unit 300.

Optionally, in an eleventh step S11, at least one offline token re-registration request is received by an offline token re-registration request receiving unit 201 of the token register 200 from an offline token registration request providing unit 103 of the secure offline electronic token transaction unit 100. In a nineth step S9, at least one offline token re-registration request note is provided by an offline token re-registration request note providing unit 204 of the token register 200 to the online-to-offline token transfer unit 300.

Optionally, in a twelfth step S12, at least one offline token re-registration request is received by an offline token re-registration request receiving unit 307 of the online-to-offline token transfer unit 300 from at least one other offline electronic token transaction unit. In a thirteenth step S13, at least one offline token re-registration request is provided by an offline token re-registration request providing unit 308 of the online-to-offline token transfer unit 300 to the token register 200.

Optionally, in a fourteenth step S14, at least one offline digital currency token is received by an offline token receiving unit 309 of the online-to-offline token transfer unit 300 from at least one other offline token storage unit. In a fifteenth step S15, at least one offline token deletion request is provided by an offline token deletion request providing unit 310 of the online-to-offline token transfer unit 300 to at least one token register 200. In a sixteenth step S16, the received offline digital currency token is transferred by an online-to-offline transfer unit 303 of the online-to-offline token transfer unit 300 to an online digital currency token. In a seventeenth step S17, at least one online token is provided by an online token providing unit 311 of the online-to-offline token transfer unit 300 to the at least one online token storage unit.

Optionally, in an eighteenth step S18, a deletion result is provided by a deletion result providing unit 206 of the token register 200 and the deletion result is transmitted to the online-to-offline token transfer unit 300.

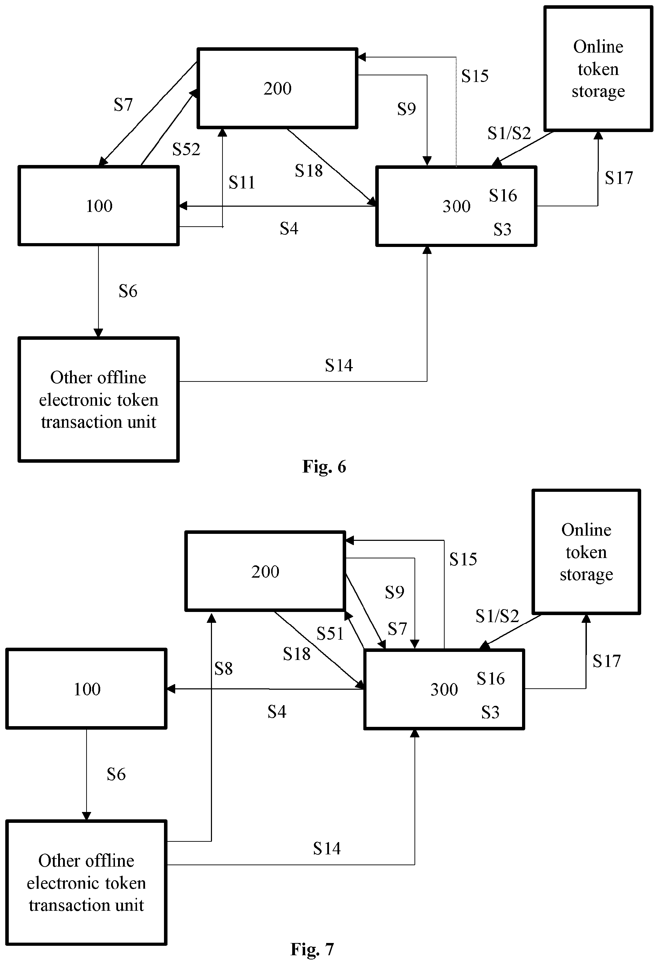

In Fig. 6, there is depicted a first variant of a method for transferring an online digital currency token into an offline digital currency token and for transferring an offline token to another offline electronic token transaction unit.

In a first step S1 of the first variant of the method for transferring an online token into an offline token, at least one online-to-offline token transfer request is received from at least one online token storage unit of a first user K. The at least one online-to-offline token transfer request, including the identifier of the user K, is received by an online-to-offline token transfer request receiving unit 301 of the online-to-offline token transfer unit 300. In other words, the at least one online-to-offline token transfer request is provided respectively transmitted from the online token storage unit of the user K to an online-to-offline token transfer request receiving unit 301 of the online-to-offline token transfer unit 300.

In a second step S2 of the first variant of the method for transferring an online token into an offline token, at least one online digital currency token is received from at least one online token storage unit of the user K. The at least one online digital currency token is received by an online token receiving unit 302 of the online-to-offline token transfer unit 300. In other words, the at least one online digital currency token is provided respectively transmitted from the online token storage unit of the user K to an online token receiving unit 302 of the online-to-offline token transfer unit 300.

The first step S1 and the second step are executed at the same time. Alternatively, the first step S1 and the second step S2 are executed subsequently.

In a third step S3 of the first variant of the method for transferring an online token into an offline token, the received online digital currency token is transferred to an offline digital currency token, wherein the offline digital currency token is provided with the identifier of the user K. The transferring is provided by an online-to-offline transfer unit 303.

In a fourth step S4 of the first variant of the method for transferring an online token into an offline token, at least one offline digital currency token, having the identifier of user K, is provided to an offline token receiving unit 104 of the secure offline electronic token transaction unit 100 having the same identifier of user K. In other words, the at least one offline digital currency token is only transmitted to a secure offline electronic token transaction unit 100 owned by the same user. The at least one offline digital currency token is provided respectively transmitted by an offline token providing unit 305 of the online-to-offline token transfer unit 300 to the secure offline electronic token transaction unit 100.

In a fifth step S52 of the first variant of the method for transferring an online token into an offline token, at least one offline token registration request, having the identifier of user K, is provided and the provided at least one offline token registration request is transmitted to at least one token register 200. The at least one offline token registration request is provided respectively generated by an offline token registration request providing unit 103 of the secure offline electronic token transaction unit 100. The providing by the offline token registration request providing unit 103 inserts in the registration request an offline-identifier of the user K of the offline token transaction system 900, which is at least assigned to an online-identifier of the user K in the online transaction system 800. The insertion of the identifier of user K is based on the received at least one offline digital currency token, having the identifier of user K.

In a sixth step S6 of the first variant of the method for transferring an online token into an offline token, at least one offline token is transferred respectively provided from the secure offline electronic token transaction unit 100 of the user K to at least one other offline electronic token transaction unit of a user M. The at least one other offline electronic token transaction unit of the user M is external to the secure offline electronic token transaction unit 100 of the user K. The transferring is provided by an offline token transfer processing unit 102 of the secure offline electronic token transaction unit 100. In other words, the at least one other offline electronic token transaction unit of the user M receives at least one offline token from an offline token transfer processing unit 102 of the secure offline electronic token transaction unit 100 of the user K.

In a sept step S7 of the first variant of the method for transferring an online token into an offline token, a registration result is provided and is transmitted to the offline token registration request providing unit 104 of a secure offline electronic token transaction unit 100. The registration result is provided by a registration result providing unit 203 of the token register 200.

In an eight step S11 of the first variant of the method for transferring an online token into an offline token, at least one offline token re-registration request having the identifier of user K is received by an offline token re-registration request receiving unit 201 of the token register 200 from an offline token registration request providing unit 103 of the secure offline electronic token transaction unit 100. In other words, the offline token registration request providing unit 103 of the secure offline electronic token transaction unit 100 provides respectively transmits the at least one offline token re-registration request to the offline token re-registration request receiving unit 201 of the token register 200. The re-registration request is provided by the offline token registration request providing unit 103.

In a ninth step S9 of the first variant of the method for transferring an online token into an offline token, at least one offline token re-registration request note, optionally also having the identifier of K, is provided respectively transmitted by an offline token re-registration request note providing unit 204 of the token register 200 to the online-to-offline token transfer unit 300. The at least one offline token re-registration request note is provided respectively generated by the offline token re-registration request note providing unit 204 of the token register 200.

In a tenth step S14 of the first variant of the method for transferring an online token into an offline token, at least one offline digital currency token, having the identifier of user M, is received by an offline token receiving unit 309 of the online-to-offline token transfer unit 300 from at least one other offline token storage unit of the user M. In other words, the at least one offline digital currency token is provided respectively transmitted from the at least one other offline token storage unit of the user M to the offline token receiving unit 309 of the online-to-offline token transfer unit 300. Alternatively, instead of transmitting at least one offline digital currency token, having the identifier of user M, to the offline token receiving unit 309 of the online-to-offline token transfer unit 300, the at least one other offline token storage unit of the user M may transmit the at least one offline digital currency token, having the identifier of user M, to further other the at least one offline digital currency token.

In an eleventh step S15 of the first variant of the method for transferring an online token into an offline token, at least one offline token deletion request, optionally having the identifier of user K or M, is provided respectively transmitted by an offline token deletion request providing unit 310 of the online-to-offline token transfer unit 300 to at least one token register 200. The at least one offline token deletion request is generated respectively provided by the offline token deletion request providing unit 310 of the online-to-offline token transfer unit 300.

In a twelfth step S16 of the first variant of the method for transferring an online token into an offline token, the received offline digital currency token having the identifier of user M is transferred by the online-to-offline transfer unit 303 of the online-to-offline token transfer unit 300 to an online digital currency token having the identifier of the user M.

In a thirteenth step S17 of the first variant of the method for transferring an online token into an offline token, at least one online token having the identifier of user M is provided respectively transmitted by an online token providing unit 311 of the online-to-offline token transfer unit 300 to the at least one online token storage unit of the user M.

In a fourteenth step S18 of the first variant of the method for transferring an online token into an offline token, a deletion result is provided respectively generated by a deletion result providing unit 206 of the token register 200 a deletion result. The deletion result is provided respectively transmitted from the deletion result providing unit 206 of the token register 200 to the online-to-offline token transfer unit 300.

The token register 200, the online-to-offline token transfer unit 300, the secure offline electronic token transaction unit 100, the online token storage unit and the at least one other offline electronic token transaction unit are directly or indirectly coupled to each other.

In Fig. 7, there is depicted a second variant of a method for transferring an online digital currency token into an offline digital currency token and for transferring an offline token to another offline electronic token transaction unit.

In a first step S1 of the second variant of the method for transferring an online token into an offline token, at least one online-to-offline token transfer request is received from at least one online token storage unit of a first user K. The at least one online-to-offline token transfer request, including the identifier of the user K, is received by an online-to-offline token transfer request receiving unit 301 of the online-to-offline token transfer unit 300. In other words, the at least one online-to-offline token transfer request is provided respectively transmitted from the online token storage unit of the user K to an online-to-offline token transfer request receiving unit 301 of the online-to-offline token transfer unit 300.

In a second step S2 of the second variant of the method for transferring an online token into an offline token, at least one online digital currency token is received from at least one online token storage unit of the user K. The at least one online digital currency token is received by an online token receiving unit 302 of the online-to-offline token transfer unit 300. In other words, the at least one online digital currency token is provided respectively transmitted from the online token storage unit of the user K to an online token receiving unit 302 of the online-to-offline token transfer unit 300.

The first step S1 and the second step are executed at the same time. Alternatively, the first step S1 and the second step S2 are executed subsequently.

In a third step S3 of the second variant of the method for transferring an online token into an offline token, the received online digital currency token is transferred to an offline digital currency token, wherein the offline digital currency token is provided with the identifier of the user K. The transferring is provided by an online-to-offline transfer unit 303.

In a fourth step S4 of the second variant of the method for transferring an online token into an offline token, at least one offline digital currency token, having the identifier of user K, is provided to an offline token receiving unit 104 of the secure offline electronic token transaction unit 100 having the same identifier of user K. In other words, the at least one offline digital currency token is only transmitted to a secure offline electronic token transaction unit 100 owned by the same user. The at least one offline digital currency token is provided respectively transmitted by an offline token providing unit 305 of the online-to-offline token transfer unit 300 to the secure offline electronic token transaction unit 100.

In a fifth step S51 of the second variant of the method for transferring an online token into an offline token, at least one offline token registration request, having the identifier of user K, is provided by an offline token registration request providing unit 304 of the online-to-offline token transfer unit 300 and the provided at least one offline token registration request, having the identifier of user K, is transmitted to at least one token register 200. The at least one offline token registration request is provided respectively generated by an offline token registration request providing unit 103 of the secure offline electronic token transaction unit 100. The providing by the offline token registration request providing unit 103 inserts in the registration request an offline-identifier of the user K of the offline token transaction system 900, which is at least assigned to an online-identifier of the user in the online transaction system 800. The insertion of the identifier of user K is based on the received at least one offline digital currency token, having the identifier of user K.

In a sixth step S6 of the second variant of the method for transferring an online token into an offline token, at least one offline token is transferred respectively provided from the secure offline electronic token transaction unit 100 of the user K to at least one other offline electronic token transaction unit of a user M. The at least one other offline electronic token transaction unit of the user M is external to the secure offline electronic token transaction unit 100 of the user K. The transferring is provided by an offline token transfer processing unit 102 of the secure offline electronic token transaction unit 100. In other words, the at least one other offline electronic token transaction unit of the user M receives at least one offline token from an offline token transfer processing unit 102 of the secure offline electronic token transaction unit 100 of the user K.

In a sept step S7 of the second variant of the method for transferring an online token into an offline token, a registration result is provided and is transmitted to the online-to-offline token transfer unit 300. The registration result is provided by a registration result providing unit 203 of the token register 200.

In an eight step S8 of the second variant of the method for transferring an online token into an offline token, at least one offline token re-registration request, optionally having the identifier of user M, is received by an offline token re-registration request receiving unit 201 of the token register 200 from at least one other offline electronic token transaction unit of the user M. In other words, the at least one offline token re-registration request is provided respectively generated by the at least one other offline electronic token transaction unit and is transmitted respectively provided to the offline token re-registration request receiving unit 201 of the token register 200.

In a ninth step S9 of the second variant of the method for transferring an online token into an offline token, at least one offline token re-registration request note, optionally also having the identifier of K, is provided respectively transmitted by an offline token re-registration request note providing unit 204 of the token register 200 to the online-to-offline token transfer unit 300. The at least one offline token re-registration request note is provided respectively generated by the offline token re-registration request note providing unit 204 of the token register 200.

In a tenth step S14 of the second variant of the method for transferring an online token into an offline token, at least one offline digital currency token, having the identifier of user M, is received by an offline token receiving unit 309 of the online-to-offline token transfer unit 300 from at least one other offline token storage unit of the user M. In other words, the at least one offline digital currency token is provided respectively transmitted from the at least one other offline token storage unit of the user M to the offline token receiving unit 309 of the online-to-offline token transfer unit 300. Alternatively, instead of transmitting at least one offline digital currency token, having the identifier of user M, to the offline token receiving unit 309 of the online-to-offline token transfer unit 300, the at least one other offline token storage unit of the user M may transmit the at least one offline digital currency token, having the identifier of user M, to further other the at least one offline digital currency token.

In an eleventh step S15 of the second variant of the method for transferring an online token into an offline token, at least one offline token deletion request, optionally having the identifier of user K or M, is provided respectively transmitted by an offline token deletion request providing unit 310 of the online-to-offline token transfer unit 300 to at least one token register 200. The at least one offline token deletion request is generated respectively provided by the offline token deletion request providing unit 310 of the online-to-offline token transfer unit 300.

In a twelfth step S16 of the second variant of the method for transferring an online token into an offline token, the received offline digital currency token having the identifier of user M is transferred by the online-to-offline transfer unit 303 of the online-to-offline token transfer unit 300 to an online digital currency token having the identifier of the user M.

In a thirteenth step S17 of the second variant of the method for transferring an online token into an offline token, at least one online token having the identifier of user M is provided respectively transmitted by an online token providing unit 311 of the online-to-offline token transfer unit 300 to the at least one online token storage unit of the user M. In a fourteenth step S18 of the second variant of the method for transferring an online token into an offline token, a deletion result is provided respectively generated by a deletion result providing unit 206 of the token register 200 a deletion result. The deletion result is provided respectively transmitted from the deletion result providing unit 206 of the token register 200 to the online-to-offline token transfer unit 300.

The token register 200, the online-to-offline token transfer unit 300, the secure offline electronic token transaction unit 100, the online token storage unit and the at least one other offline electronic token transaction unit are directly or indirectly coupled to each other.

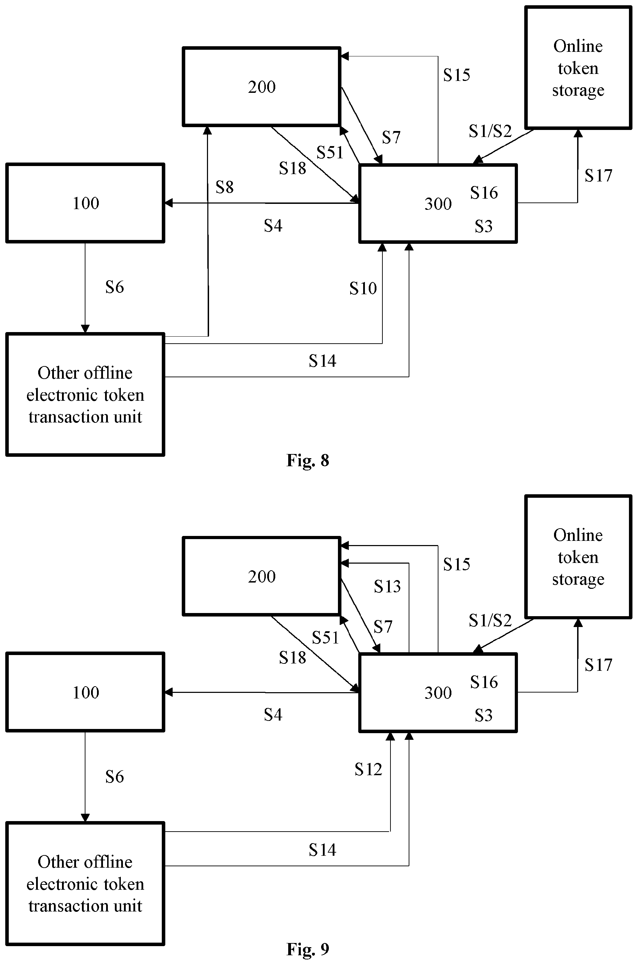

In Fig. 8, there is depicted a third variant of a method for transferring an online digital currency token into an offline digital currency token and for transferring an offline token to another offline electronic token transaction unit.

In a first step S1 of the third variant of the method for transferring an online token into an offline token, at least one online-to-offline token transfer request is received from at least one online token storage unit of a first user K. The at least one online-to-offline token transfer request, including the identifier of the user K, is received by an online-to-offline token transfer request receiving unit 301 of the online-to-offline token transfer unit 300. In other words, the at least one online-to-offline token transfer request is provided respectively transmitted from the online token storage unit of the user K to an online-to-offline token transfer request receiving unit 301 of the online-to-offline token transfer unit 300.

In a second step S2 of the third variant of the method for transferring an online token into an offline token, at least one online digital currency token is received from at least one online token storage unit of the user K. The at least one online digital currency token is received by an online token receiving unit 302 of the online-to-offline token transfer unit 300. In other words, the at least one online digital currency token is provided respectively transmitted from the online token storage unit of the user K to an online token receiving unit 302 of the online-to-offline token transfer unit 300.

The first step S1 and the second step are executed at the same time. Alternatively, the first step S1 and the second step S2 are executed subsequently.

In a third step S3 of the third variant of the method for transferring an online token into an offline token, the received online digital currency token is transferred to an offline digital currency token, wherein the offline digital currency token is provided with the identifier of the user K. The transferring is provided by an online-to-offline transfer unit 303.

In a fourth step S4 of the third variant of the method for transferring an online token into an offline token, at least one offline digital currency token, having the identifier of user K, is provided to an offline token receiving unit 104 of the secure offline electronic token transaction unit 100 having the same identifier of user K. In other words, the at least one offline digital currency token is only transmitted to a secure offline electronic token transaction unit 100 owned by the same user. The at least one offline digital currency token is provided respectively transmitted by an offline token providing unit 305 of the online-to-offline token transfer unit 300 to the secure offline electronic token transaction unit 100.

In a fifth step S51 of the third variant of the method for transferring an online token into an offline token, at least one offline token registration request, having the identifier of user K, is provided by an offline token registration request providing unit 304 of the online-to-offline token transfer unit 300 and the provided at least one offline token registration request, having the identifier of user K, is transmitted to at least one token register 200. The at least one offline token registration request is provided respectively generated by an offline token registration request providing unit 103 of the secure offline electronic token transaction unit 100. The providing by the offline token registration request providing unit 103 inserts in the registration request an offline-identifier of the user K of the offline token transaction system 900, which is at least assigned to an online-identifier of the user in the online transaction system 800. The insertion of the identifier of user K is based on the received at least one offline digital currency token, having the identifier of user K.

In a sixth step S6 of the third variant of the method for transferring an online token into an offline token, at least one offline token is transferred respectively provided from the secure offline electronic token transaction unit 100 of the user K to at least one other offline electronic token transaction unit of a user M. The at least one other offline electronic token transaction unit of the user M is external to the secure offline electronic token transaction unit 100 of the user K. The transferring is provided by an offline token transfer processing unit 102 of the secure offline electronic token transaction unit 100. In other words, the at least one other offline electronic token transaction unit of the user M receives at least one offline token from an offline token transfer processing unit 102 of the secure offline electronic token transaction unit 100 of the user K.

In a sept step S7 of the third variant of the method for transferring an online token into an offline token, a registration result is provided and is transmitted to the online-to-offline token transfer unit 300. The registration result is provided by a registration result providing unit 203 of the token register 200.

In an eight step S8 of the third variant of the method for transferring an online token into an offline token, at least one offline token re-registration request, optionally having the identifier of user M, is received by an offline token re-registration request receiving unit 201 of the token register 200 from at least one other offline electronic token transaction unit of the user M. In other words, the at least one offline token re-registration request is provided respectively generated by the at least one other offline electronic token transaction unit and is transmitted respectively provided to the offline token re-registration request receiving unit 201 of the token register 200.

In a ninth step S10 of the third variant of the method for transferring an online token into an offline token, at least one offline token re-registration request note, optionally having the identifier of user M, is provided from the at least one other offline electronic token transaction unit of the user M to the online-to-offline token transfer unit 300. The at least one offline token re-registration request is generated by the at least one other offline electronic token transaction unit and is transmitted from the by the at least one other offline electronic token transaction unit to the online-to-offline token transfer unit 300.

In a tenth step S14 of the third variant of the method for transferring an online token into an offline token, at least one offline digital currency token, having the identifier of user M, is received by an offline token receiving unit 309 of the online-to-offline token transfer unit 300 from at least one other offline token storage unit of the user M. In other words, the at least one offline digital currency token is provided respectively transmitted from the at least one other offline token storage unit of the user M to the offline token receiving unit 309 of the online-to-offline token transfer unit 300. Alternatively, instead of transmitting at least one offline digital currency token, having the identifier of user M, to the offline token receiving unit 309 of the online-to-offline token transfer unit 300, the at least one other offline token storage unit of the user M may transmit the at least one offline digital currency token, having the identifier of user M, to further other the at least one offline digital currency token.

In an eleventh step S15 of the third variant of the method for transferring an online token into an offline token, at least one offline token deletion request, optionally having the identifier of user K or M, is provided respectively transmitted by an offline token deletion request providing unit 310 of the online-to-offline token transfer unit 300 to at least one token register 200. The at least one offline token deletion request is generated respectively provided by the offline token deletion request providing unit 310 of the online-to-offline token transfer unit 300.

In a twelfth step S16 of the third variant of the method for transferring an online token into an offline token, the received offline digital currency token having the identifier of user M is transferred by the online-to-offline transfer unit 303 of the online-to-offline token transfer unit 300 to an online digital currency token having the identifier of the user M.

In a thirteenth step S17 of the third variant of the method for transferring an online token into an offline token, at least one online token having the identifier of user M is provided respectively transmitted by an online token providing unit 311 of the online-to-offline token transfer unit 300 to the at least one online token storage unit of the user M.

In a fourteenth step S18 of the third variant of the method for transferring an online token into an offline token, a deletion result is provided respectively generated by a deletion result providing unit 206 of the token register 200 a deletion result. The deletion result is provided respectively transmitted from the deletion result providing unit 206 of the token register 200 to the online-to-offline token transfer unit 300.

The token register 200, the online-to-offline token transfer unit 300, the secure offline electronic token transaction unit 100, the online token storage unit and the at least one other offline electronic token transaction unit are directly or indirectly coupled to each other.

In Fig. 9, there is depicted a fourth variant of a method for transferring an online digital currency token into an offline digital currency token and for transferring an offline token to another offline electronic token transaction unit.

In a first step S1 of the fourth variant of the method for transferring an online token into an offline token, at least one online-to-offline token transfer request is received from at least one online token storage unit of a first user K. The at least one online-to-offline token transfer request, including the identifier of the user K, is received by an online-to-offline token transfer request receiving unit 301 of the online-to-offline token transfer unit 300. In other words, the at least one online-to-offline token transfer request is provided respectively transmitted from the online token storage unit of the user K to an online-to-offline token transfer request receiving unit 301 of the online-to-offline token transfer unit 300.

In a second step S2 of the fourth variant of the method for transferring an online token into an offline token, at least one online digital currency token is received from at least one online token storage unit of the user K. The at least one online digital currency token is received by an online token receiving unit 302 of the online-to-offline token transfer unit 300. In other words, the at least one online digital currency token is provided respectively transmitted from the online token storage unit of the user K to an online token receiving unit 302 of the online-to-offline token transfer unit 300.

The first step S1 and the second step are executed at the same time. Alternatively, the first step S1 and the second step S2 are executed subsequently.

In a third step S3 of the fourth variant of the method for transferring an online token into an offline token, the received online digital currency token is transferred to an offline digital currency token, wherein the offline digital currency token is provided with the identifier of the user K. The transferring is provided by an online-to-offline transfer unit 303.

In a fourth step S4 of the fourth variant of the method for transferring an online token into an offline token, at least one offline digital currency token, having the identifier of user K, is provided to an offline token receiving unit 104 of the secure offline electronic token transaction unit 100 having the same identifier of user K. In other words, the at least one offline digital currency token is only transmitted to a secure offline electronic token transaction unit 100 owned by the same user. The at least one offline digital currency token is provided respectively transmitted by an offline token providing unit 305 of the online-to-offline token transfer unit 300 to the secure offline electronic token transaction unit 100.

In a fifth step S51 of the fourth variant of the method for transferring an online token into an offline token, at least one offline token registration request, having the identifier of user K, is provided by an offline token registration request providing unit 304 of the online-to-offline token transfer unit 300 and the provided at least one offline token registration request, having the identifier of user K, is transmitted to at least one token register 200. The at least one offline token registration request is provided respectively generated by an offline token registration request providing unit 103 of the secure offline electronic token transaction unit 100. The providing by the offline token registration request providing unit 103 inserts in the registration request an offline-identifier of the user K of the offline token transaction system 900, which is at least assigned to an online-identifier of the user in the online transaction system 800. The insertion of the identifier of user K is based on the received at least one offline digital currency token, having the identifier of user K.

In a sixth step S6 of the fourth variant of the method for transferring an online token into an offline token, at least one offline token is transferred respectively provided from the secure offline electronic token transaction unit 100 of the user K to at least one other offline electronic token transaction unit of a user M. The at least one other offline electronic token transaction unit of the user M is external to the secure offline electronic token transaction unit 100 of the user K. The transferring is provided by an offline token transfer processing unit 102 of the secure offline electronic token transaction unit 100. In other words, the at least one other offline electronic token transaction unit of the user M receives at least one offline token from an offline token transfer processing unit 102 of the secure offline electronic token transaction unit 100 of the user K.

In a sept step S7 of the fourth variant of the method for transferring an online token into an offline token, a registration result is provided and is transmitted to the online-to-offline token transfer unit 300. The registration result is provided by a registration result providing unit 203 of the token register 200.

In an eight step S12 of the fourth variant of the method for transferring an online token into an offline token, at least one offline token re-registration request, having the identifier of user M, is received by an offline token re-registration request receiving unit 307 of the online-to-offline token transfer unit 300 from at least one other offline electronic token transaction unit of the user M. The at least one offline token re-registration request is provided by the least one other offline electronic token transaction unit and is provided respectively transmitted by the at least one other offline electronic token transaction unit to the offline token re-registration request receiving unit 307 of the online-to-offline token transfer unit 300.

In a ninth step S13 of the fourth variant of the method for transferring an online token into an offline token, at least one offline token re-registration request having the identifier of user M is provided by an offline token re-registration request providing unit 308 of the online-to-offline token transfer unit 300 to the token register 200. The at least one offline token re-registration request is provided respectively generated by the offline token re-registration request providing unit 308 of the online-to-offline token transfer unit 300 and is transmitted by the offline token re-registration request providing unit 308 of the online-to-offline token transfer unit 300 to the token register.

In a tenth step S14 of the fourth variant of the method for transferring an online token into an offline token, at least one offline digital currency token, having the identifier of user M, is received by an offline token receiving unit 309 of the online-to-offline token transfer unit 300 from at least one other offline token storage unit of the user M. In other words, the at least one offline digital currency token is provided respectively transmitted from the at least one other offline token storage unit of the user M to the offline token receiving unit 309 of the online-to-offline token transfer unit 300. Alternatively, instead of transmitting at least one offline digital currency token, having the identifier of user M, to the offline token receiving unit 309 of the online-to-offline token transfer unit 300, the at least one other offline token storage unit of the user M may transmit the at least one offline digital currency token, having the identifier of user M, to further other the at least one offline digital currency token.

In an eleventh step S15 of the fourth variant of the method for transferring an online token into an offline token, at least one offline token deletion request, optionally having the identifier of user K or M, is provided respectively transmitted by an offline token deletion request providing unit 310 of the online-to-offline token transfer unit 300 to at least one token register 200. The at least one offline token deletion request is generated respectively provided by the offline token deletion request providing unit 310 of the online-to-offline token transfer unit 300.

In a twelfth step S16 of the fourth variant of the method for transferring an online token into an offline token, the received offline digital currency token having the identifier of user M is transferred by the online-to-offline transfer unit 303 of the online-to-offline token transfer unit 300 to an online digital currency token having the identifier of the user M.

In a thirteenth step S17 of the fourth variant of the method for transferring an online token into an offline token, at least one online token having the identifier of user M is provided respectively transmitted by an online token providing unit 311 of the online-to-offline token transfer unit 300 to the at least one online token storage unit of the user M. In a fourteenth step S18 of the fourth variant of the method for transferring an online token into an offline token, a deletion result is provided respectively generated by a deletion result providing unit 206 of the token register 200 a deletion result. The deletion result is provided respectively transmitted from the deletion result providing unit 206 of the token register 200 to the online-to-offline token transfer unit 300.

The token register 200, the online-to-offline token transfer unit 300, the secure offline electronic token transaction unit 100, the online token storage unit and the at least one other offline electronic token transaction unit are directly or indirectly coupled to each other.

### REFERENCE SIGNS

100 secure electronic token transaction unit or secure offline electronic token transaction unit
101 token storage unit or offline token storage unit
102 token transfer processing unit or offline token transfer processing unit
103 token registration request providing unit or offline token registration request providing unit
104 offline token receiving unit
105 registration result providing unit
200 token register
201 token registration request receiving unit or offline token registration request receiving unit
202 token register storage unit
203 registration result providing unit
204 offline token re-registration request note providing unit
205 offline token deletion request receiving unit
206 deletion result providing unit
300 bridge unit or online-to-offline token transfer unit
301 bridge request providing unit or an online-to-offline token transfer request receiving unit
302 account token receiving unit or online token receiving unit
303 bridge transfer unit or online-to-offline token transfer unit
304 token registration request providing unit or offline token registration request providing unit
305 token providing unit or offline token providing unit
306 offline token re-registration request note receiving unit
307 offline token re-registration request receiving unit
308 offline token re-registration request providing unit
309 offline token receiving unit
310 offline token deletion request providing unit
311 online token providing unit
TS electronic token transaction system
800 account transaction system or online token transaction system
900 token transaction system or offline token transaction system
S1 receiving step
S2 receiving step
S3 transferring step
S31 providing step
S32 blocking step
S33 registering step
S4 providing step
S51 providing step
S52 providing step
S6 transferring step
S7 providing step
S8 receiving step
S9 providing step
S10 providing step
S11 receiving step
S12 receiving step
S13 providing step
S14 receiving step
S15 providing step
S16 transferring step
S17 providing step
S18 providing step

## Claims

1. A secure electronic token transaction unit (100) comprising:
a token storage unit (101) configured for storing one or more digital currency token of an electronic token transaction system comprising a token transaction system (900) and an account transaction system (800);
a token transfer processing unit (102) configured for transferring, in a transaction, at least one digital currency token to at least one other electronic token transaction unit of the token transaction system, and
a token registration request providing unit (103) configured for providing at least one token registration request and for transmitting the at least one token registration request to a token register (200) of the electronic token transaction system and/or for providing at least one token re-registration request and for transmitting the at least one token re-registration request to a token register (200) of the electronic token transaction system,
wherein the token registration request providing unit (103) is configured for inserting in the registration request and/or re-registration request an identifier of a user of the token transaction system (900), which is at least assigned to an identifier of the user in the account transaction system (800).

2. The secure electronic token transaction unit (100) according to claim 1,
wherein the secure electronic token transaction unit (100) is a secure offline electronic token transaction unit, and/or
wherein the token storage unit (101) is an offline token storage unit, and/or
wherein the one or more digital currency token is one or more offline digital currency token, and/or
wherein the token transaction system (900) is an offline token transaction system, and/or
wherein the account transaction system (800) is an online transaction system, and/or
wherein the token transfer processing unit (102) is an offline token transfer processing unit, and/or
wherein the transaction is an offline transaction, and/or
wherein the at least one other electronic token transaction unit is at least one other offline electronic token transaction unit, and/or
wherein the token registration request providing unit (103) is an offline token registration request providing unit, and/or
wherein the at least one token registration request is at least one offline token registration request, and/or
wherein the at least one token re-registration request is at least one offline token re-registration request, and/or
wherein the identifier is an offline-identifier or an online-identifier.

3. The secure offline electronic token transaction unit (100) according to any one of the preceding claims, further comprising:
an offline token receiving unit (104) configured for receiving at least one offline digital currency token from an online-to-offline token transfer unit (300).

4. The secure offline electronic token transaction unit (100) according to any one of the preceding claims, further comprising:
a registration result receiving unit (105) configured for receiving a registration result from a token register (200).

5. A token register (200) comprising:
a token registration request receiving unit (201) for receiving at least one token registration request from a bridge unit (300) or from a token registration request providing unit (103) of a secure electronic token transaction unit (100) and/or for receiving at least one token re-registration request from the token registration request providing unit (103) of the secure electronic token transaction unit (100), from at least one other electronic token transaction unit or from the bridge unit (300); and
a token register storage unit (202) for registering, replacing, or deleting at least one digital currency token in the token register (200) based on the received at least one token registration request and/or the received at least one token re-registration request.

6. The token register (200) according to claim 5,
wherein the token registration request receiving unit (201) is an offline token registration request receiving unit, and/or
wherein the at least one token registration request is at least one offline token registration request, and/or
wherein the bridge unit (300) is an online-to-offline token transfer unit, and/or
wherein the token registration request providing unit (103) is an offline token registration request providing unit, and/or
wherein the secure electronic token transaction unit (100) is a secure offline electronic token transaction unit, and/or
wherein the at least one token re-registration request is at least one offline token re-registration request, and/or
wherein the at least one other electronic token transaction unit is at least one other offline electronic token transaction unit, and/or
wherein the at least one digital currency token is at least one offline digital currency token.

7. The token register (200) according to claims 5 or 6, further comprising:
a registration result providing unit (203) configured for providing a registration result and for transmitting the registration result to the online-to-offline token transfer unit (300) or to an offline token registration request providing unit (103) of the secure offline electronic token transaction unit (100).

8. The token register (200) according to any one of the claims 5 or 7, further comprising:
an offline token re-registration request note providing unit (204) configured for providing at least one offline token re-registration request note and for transmitting the at least one offline token re-registration request note to the online-to-offline token transfer unit (300).

9. The token register (200) according to any one of the claims 5 to 8, further comprising:
an offline token deletion request receiving unit (205) for receiving at least one offline token deletion request from an online-to-offline token transfer unit (300) or from an offline token registration request providing unit (103) of a secure offline electronic token transaction unit (100).

10. The token register (200) according to any one of the claims 5 to 9, further comprising:
a deletion result providing unit (206) configured for providing a deletion result and for transmitting the deletion result to the online-to-offline token transfer unit (300).

11. A bridge unit (300) comprising:
a bridge request receiving unit (301) for receiving at least one bridge request from at least one account token storage unit;
an account token receiving unit (302) for receiving at least one account digital currency token from the at least one account token storage unit;
a bridge transfer unit (303) for transferring at least one account digital currency token into at least one digital currency token;
a token registration request providing unit (304) for providing at least one token registration request based on the received at least one bridge request and for transmitting the at least one token registration request to at least one token register (200); and
a token providing unit (305) for providing at least one digital currency token based on the received at least one bridge request to a secure electronic token transaction unit (100),
wherein the token registration request providing unit (304) is configured for inserting in the registration request an identifier of a user of the token transaction system (900), which is at least assigned to an identifier of the user in the account transaction system (800).

12. The bridge unit (300) according to claim 11,
wherein the bridge unit (300) is an online-to-offline token transfer unit, and /or
wherein the bridge request receiving unit (301) is an online-to-offline token transfer request receiving unit, and/or
wherein the least one bridge request is at least one online-to-offline token transfer request, and/or
wherein the at least one account token storage unit is at least one online token storage unit, and/or
wherein the account token receiving unit (302) is an online token receiving unit, and/or
wherein the at least one account digital currency token is at least one online digital currency token
wherein the at least one digital currency token is at least one offline digital currency token; and/or
wherein the bridge transfer unit (303) is an online-to-offline token transfer unit, and/or
wherein the token registration request providing unit (304) is an offline token registration request providing unit, and/or
wherein the at least one token registration request is at least one offline token registration request, and/or
wherein the token providing unit (305) is an offline token providing unit, and/or
wherein the secure electronic token transaction unit (100) is a secure offline electronic token transaction unit (100), and/or
wherein the identifier is an offline-identifier or an online-identifier, and/or
wherein the token transaction system (900) is an offline token transaction system, and/or
wherein the account transaction system (800) is an online transaction system.

13. The online-to-offline token transfer unit (300) according to claim 11 or 12, further comprising:
an offline token re-registration request note receiving unit (306) for receiving at least one offline token re-registration request note from the offline token re-registration request note providing unit (204) of the token register (200) or for receiving at least one offline token re-registration request note from the other offline electronic token transaction unit.

14. The online-to-offline token transfer unit (300) according to claims 11 or 13, further comprising:
an offline token re-registration request receiving unit (307) for receiving at least one offline token re-registration request from at least one other offline electronic token transaction unit; and
an offline token re-registration request providing unit (308) for providing at least one offline token re-registration request to the token register (200).

15. The online-to-offline token transfer unit (300) according to claims 11 to 14, further comprising:
an offline token receiving unit (309) for receiving at least one offline digital currency token from at least one other offline electronic token transaction unit;
an offline token deletion request providing unit (310) for providing at least one offline token deletion request based on the received at least one offline digital currency token and for transmitting the at least one offline token deletion request to at least one token register (200); and
an online token providing unit (311) for providing at least one online token to an at least one online token storage unit.

16. An electronic token transaction system (TS) comprising:
a token register (200) according to any one of the claims 5 to 10;
an account transaction system (800); and
a token transaction system (900),
wherein token transaction system (900) comprises a bridge unit (300) according to any one of the claims 11 to 15 and an electronic token transaction unit (100) according to any one of the claims 1 to 4.

17. The electronic token transaction system (TS) according to claim 16,
wherein the account transaction system (800) is an online token transaction system, and/or
wherein the token transaction system (900) is an offline token transaction system, and/or
wherein the bridge unit (300) is an online-to-offline token transfer unit, and/or
wherein the secure electronic token transaction unit (100) is a secure offline electronic token transaction unit.

18. Method for transferring an account digital currency token into a digital currency token, comprising:
receiving (S1) by a bridge receiving unit (301) of the bridge unit (300) at least one bridge request from at least one account token storage unit;
receiving (S2) by an account token receiving unit (302) of the bridge unit (300) at least one account digital currency token from at least one account token storage unit;
transferring (S3) by a bridge transfer unit (303) the received account digital currency token to a digital currency token;
providing (S4) by a token providing unit (305) of the bridge unit (300) at least one digital currency token to a token receiving unit (104) of the secure electronic token transaction unit (100); and
providing (S51) by a token registration request providing unit (304) of the bridge unit (300) at least one token registration request and transmitting the at least one token registration request to at least one token register (200); or
providing (S52) by a token registration request providing unit (103) of the secure electronic token transaction unit (100) at least one token registration request and transmitting the at least one token registration request to at least one token register (200),
wherein the providing by the token registration request providing unit (304) or by the token registration request providing unit (103) inserts in the registration request an identifier of a user of the token transaction system (900), which is at least assigned to an identifier of the user in an account transaction system (800).

19. Method according to claim 18,
wherein the digital currency token is an offline digital currency token, and/or
wherein the account digital currency token is an online digital currency token, and/or
wherein the bridge request receiving unit (301) is an online-to-offline token transfer request receiving unit (301), and/or
wherein the bridge unit (300) is an online-to-offline token transfer unit, and/or
wherein the least one bridge request is at least one online-to-offline token transfer request, and/or
wherein the at least one account token storage unit is at least one online token storage unit, and/or
wherein the account token receiving unit (302) is an online token receiving unit, and/or
wherein the bridge transfer unit (303) is an online-to-offline token transfer unit, and/or
wherein the token providing unit (305) is an offline token providing unit, and/or
wherein the token receiving unit (104) is an offline token receiving unit, and/or
wherein the secure electronic token transaction unit (100) is a secure offline electronic token transaction unit (100), and/or
wherein the token registration request providing unit (304) is an offline token registration request providing unit, and/or
wherein the at least one token registration request is at least one offline token registration request, and/or
wherein the token registration request providing unit (103) is an offline token registration request providing unit, and/or
wherein the identifier is an offline-identifier or an online-identifier, and/or
wherein the token transaction system (900) is an offline token transaction system, and/or
wherein the account transaction system (800) is an online transaction system.

20. Method according to claim 18 or 19, further comprising:
transferring (S6) by an offline token transfer processing unit (102) of the secure offline electronic token transaction unit (100) at least one offline token from the secure offline electronic token transaction unit (100) to at least one other offline electronic token transaction unit being external to the secure offline electronic token transaction unit (100).

21. Method according to claims 18 or 20, further comprising:
providing (S7) by a registration result providing unit (203) of the token register (200) a registration result and transmitting the registration result to the online-to-offline token transfer unit (300) or to the offline token registration request providing unit (104) of a secure offline electronic token transaction unit (100).

22. Method according to any one of the claims 18 to 21, further comprising:
receiving (S8) by an offline token re-registration request receiving unit (201) of the token register (200) at least one offline token re-registration request from at least one other offline electronic token transaction unit; and
providing (S9) by an offline token re-registration request note providing unit (204) of the token register (200) at least one offline token re-registration request note to the online-to-offline token transfer unit (300).

23. Method according to any one of the claims 18 to 21, further comprising:
receiving (S8) by an offline token re-registration request receiving unit (201) of the token register (200) at least one offline token re-registration request from at least one other offline electronic token transaction unit; and
providing (S10) at least one offline token re-registration request note from the at least one other offline electronic token transaction unit to the online-to-offline token transfer unit (300).

24. Method according to any one of the claims 18 to 21, further comprising:
receiving (S11) by an offline token re-registration request receiving unit (201) of the token register (200) at least one offline token re-registration request from an offline token registration request providing unit (103) of the secure offline electronic token transaction unit (100); and
providing (S9) by an offline token re-registration request note providing unit (204) of the token register (200) at least one offline token re-registration request note to the online-to-offline token transfer unit (300).

25. Method according to any one of the claims 18 to 21, further comprising:
receiving (S12) by an offline token re-registration request receiving unit (307) of the online-to-offline token transfer unit (300) at least one offline token re-registration request from at least one other offline electronic token transaction unit; and
providing (S13) by an offline token re-registration request providing unit (308) of the online-to-offline token transfer unit (300) at least one offline token re-registration request to the token register (200).

26. Method according to any one of the claims 18 to 25, further comprising:
receiving (S14) by an offline token receiving unit (309) of the online-to-offline token transfer unit (300) at least one offline digital currency token from at least one other offline token storage unit;
providing (S15) by an offline token deletion request providing unit (310) of the online-to-offline token transfer unit (300) at least one offline token deletion request to at least one token register (200);
transferring (S16) by an online-to-offline transfer unit (303) of the online-to-offline token transfer unit (300) the received offline digital currency token to an online digital currency token; and
providing (S17) by an online token providing unit (311) of the online-to-offline token transfer unit (300) at least one online token to the at least one online token storage unit.

27. Method according to any one of the claims 18 to 26, further comprising:
providing (S18) by a deletion result providing unit (206) of the token register (200) a deletion result and transmitting the deletion result to the online-to-offline token transfer unit (300).
